# EUROPÄISCHE PATENTSCHRIFT

(11) **EP 1 425 198 B1**
(45) Veröffentlichungstag und Bekanntmachung des Hinweises auf die Patenterteilung: **09.11.2005**
(21) Anmeldenummer: 02781094.4
(22) Anmeldetag: 11.09.2002
(51) Int. Cl.: B60N 2/07

(54) **FÜHRUNGSSCHIENE FÜR EINEN KRAFTFAHRZEUGSITZ**
GUIDE RAIL FOR THE SEAT OF A MOTOR VEHICLE
RAIL DE GUIDAGE POUR SIEGE DE VEHICULE AUTOMOBILE

(30) Priorität: 13.09.2001 DE 20115164 U
(43) Veröffentlichungstag der Anmeldung: 09.06.2004
(73) Patentinhaber: Brose Fahrzeugteile GmbH & Co. KG, Coburg, 96450 Coburg (DE)
(72) Erfinder: RAUSCH, Peter, 96489 Niederfüllbach (DE); HOFMANN, Jochen, 96257 Marktgraitz (DE); SCHWERDTNER, Christina, 96465 Neustadt (DE); HAUSLER, Bernd, 74912 Kirchardt (DE); RÄDER, Martin, 96450 Coburg (DE); FISCHER, Sven, 96482 Witzmannsberg (DE)
(74) Vertreter: Baumgärtel, Gunnar
(86) Internationale Anmeldenummer: PCT/DE2002/003474
(87) Internationale Veröffentlichungsnummer: WO 2003/022621

(56) Entgegenhaltungen:
- DE-A- 19 950 935
- DE-C- 19 616 915

## Beschreibung

Die Erfindung bezieht sich auf eine Führungsschiene für einen Kraftfahrzeugsitz mit Anbauteilen zur Anbindung eines Sitzgestells, eines Sicherheitsgurtes oder dergleichen.

Aus DE 196 16 915 A1 und DE 197 15 626 A1 sind Kraftfahrzeugsitze bekannt, die zur Anbindung eines Sitzgestells Befestigungswinkel oder rohrschellenartige Bauteile verwenden, die wiederum mittels Schrauben oder Nieten fixiert sind. Derartige Befestigungsstellen müssen die zum Teil extrem hohen Kräfte, die bei einem Crash verursacht werden, quasi punktförmig übertragen, weshalb sie sehr massiv ausgebildet sein müssen. Infolge dessen muß vergleichsweise viel Material und Bauraum eingesetzt werden.

Der Erfindung liegt deshalb die Aufgabe zugrunde, Mittel zur Anbindung von Anbauteilen an Führungsschienen eines Kraftfahrzeugsitzes zur Verfügung zu stellen, die sich durch eine hohe Belastbarkeit, geringen Materialeinsatz und automatisierte Fertigbarkeit auszeichnet.

Erfindungsgemäß wird die Aufgabe durch die Merkmale des Anspruchs 1 gelöst. Die abhängigen Ansprüche geben Vorzugsvarianten der Erfindung an.

Demnach ist wenigstens ein Anbauteile durch Laserschweißen mit der Führungsschiene verbunden. Zumindest ein Teil der für die Ausbildung der Schweißnaht vorgesehenen Stoßkanten des Anbauteils sind für das Laserschweißen vorbereitet; bei gestanzten oder zugeschnittenen, hochbelasteten Anbauteilen beträgt der Glattschnittanteil vorzugsweise mindestens 60 Prozent.

Laserschweißen hat gegenüber anderen Schweißverfahren den Vorteil, daß die thermische Belastung von Führungsschienen und Anbauteilen vergleichsweise gering ist, so daß negative Auswirkungen in Form von Wärmeverzug oder übermäßiger Gefügeveränderungen praktisch ausgeschlossen werden können.

Eine besonders hohe mechanische Belastbarkeit von aus Flachstahl oder dergleichen gefertigten Anbauteilen kann erreicht werden, wenn die Schweißnaht an gegenüberliegenden Kanten des Anbauteils oder an einer umlaufenden Kante des Anbauteils vorgesehen ist. Die zu fixierenden Anbauteile können stumpf auf die Oberfläche der Führungsschiene aufgesetzt oder in eine Öffnung der Unterschiene eingesteckt sein, bevor die Schweißnaht gesetzt wird.

Nachfolgend wird die Erfindung anhand eines von Ausführungsbeispielen und den dargestellten Figuren näher erläutert. Es zeigen:
- Figur 1a: perspektivische Explosionsdarstellung einer Führungsschiene und von zwei Anbauteilen;
- Figur 1b: Führungsschiene mit stumpf auf der Oberfläche der Führungsschiene angeschweißen Anbauteilen;
- Figur 2: Führungsschiene mit durch schlitzförmige Öffnungen eingesetzten und entlang des Randes der Öffnung verschweißten Anbauteilen;
- Figur 3a: perspektivische Explosionsdarstellung einer Führungsschiene und von zwei Anbauteilen mit Formschlußelementen;
- Figur 3b: wie Figur 3a, jedoch mit angeschweißten Formschlußelementen.

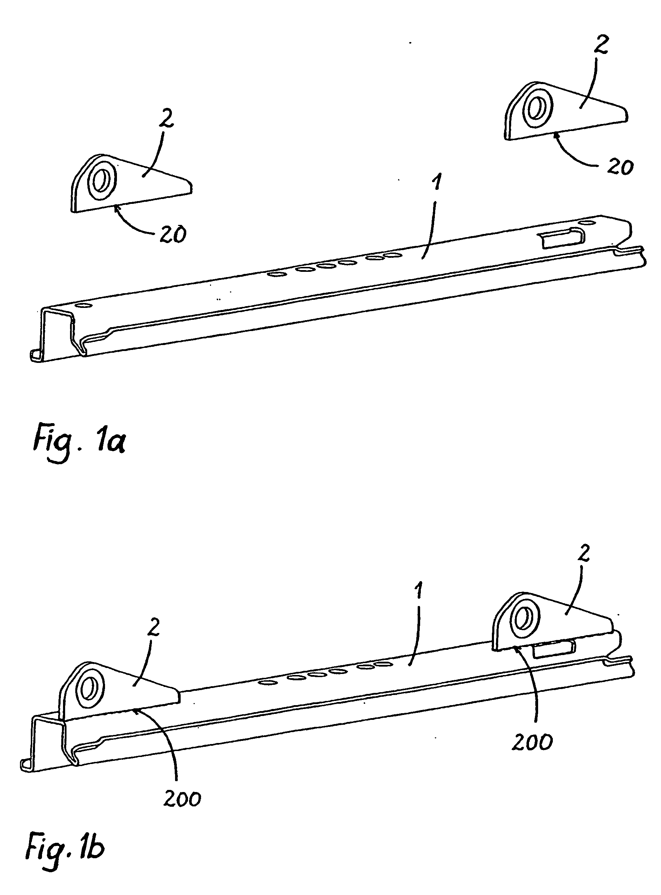

Bei dem Ausführungsbeispiel gemäß den Figuren 1a und 1b werden zur Lagerung der Achsen der (nicht dargestellten) Verstellkinematik vorne und hinten identische Anbauteile 2 verwendet, die mit ihren unteren Kanten 20 stumpf auf die Oberfläche der Führungsschiene 1 aufgesetzt sind. Die Schweißnaht 200 entlang der Kanten 20 erstreckt sich auf beiden Seiten der aus Flachstahl gefertigten Anbauteile 2. Zur Sicherung einer guten Qualität und hohen Belastbarkeit der als Kehlnaht ausgeführten Schweißnaht 200 weist die Kante 20 einen Glattschnittanteil von mindestens 60 Prozent auf.

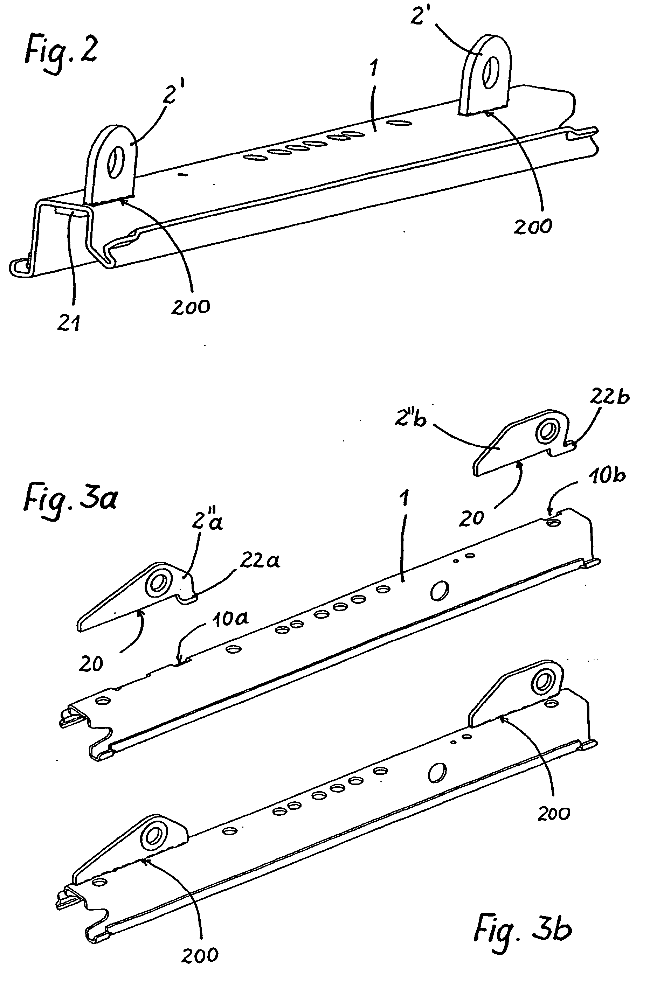

Die in Figur 2 dargestellte Ausführungsform zeigt eine Führungsschiene 1 mit schlitzförmigen Öffnungen, in die die vertikalen Schenkel eines L-förmigen Anbauteils 2' eingesteckt und mittels einer sich entlang des Randes der schlitzförmigen Öffnung erstreckenden Schweißnaht 200 befestigt sind. Der waagerechte Schenkel des Anbauteils 2' fungiert als Anschlag 21, der sich an der Unterseite der Führungsschiene abstützt. Durch eine vorzugsweise umlaufende Schweißnaht 200 wird die schlitzförmige Einstecköffnung praktisch wieder geschlossen und stellt somit keinen Schwächungsbereich der Führungsschiene 1 mehr dar.

Gemäß der Variante der Figuren 3a und 3b werden Anbauteile 2"a, 2"b verwendet, die mit einem Teilbereich (Kante 20) stumpf auf der Oberfläche der Führungsschiene 1 aufgesetzt sind, und daran angrenzend einen abgewinkelten Bereich 22a, 22b aufweisen. Den abgewinkelten Bereichen 22a, 22b sind in der Führungsschiene Eingriffsöffnungen zugeordnet, die zusätzlich zur Herstellung einer formschlüssigen Verbindung dienen.

Die hohe mechanische Belastbarkeit der beschriebenen lasergeschweißten Verbindungen erlaubt auch die Integration einer Anschlagstelle für einen Sicherheitsgurt.

### Bezugszeichenliste

- 1: Führungsschiene

- 10a: Eingriffsöffnung
- 10b: Eingriffsöffnung

- 2: Anbauteil
- 2': Anbauteil
- 2"a: Anbauteil
- 2"b: Anbauteil

- 20: Kante
- 22a: abgewinkelter Bereich
- 22b: abgewinkelter Bereich

- 200: Schweißnaht

## Patentansprüche

1. Führungsschiene für einen Kraftfahrzeugsitz mit Anbauteilen zur Anbindung eines Sitzgestells oder eines Sicherheitsgurtes,
**dadurch gekennzeichnet,**
**daß** wenigstens ein Teil der Anbauteile (2, 2"a, 2"b) zumindest mit einem Teilbereich (20) stumpf auf eine Oberfläche der Führungsschiene (1) aufgesetzt ist und durch Laserschweißen mit der Führungsschiene (1) verbunden ist.

2. Führungsschiene nach Anspruch 1, **dadurch gekennzeichnet, daß** zumindest ein Teil der für die Ausbildung der Schweißnaht (200) vorgesehenen Stoßkante (20) des Anbauteils (2) für das Laserschweißen vorbereitet ist, wobei der Glattschnittanteil vorzugsweise mindestens 60 Prozent beträgt.

3. Führungsschiene nach Anspruch 1, **dadurch gekennzeichnet, daß** die Schweißnaht (200) an gegenüberliegenden Kanten des Anbauteils (2, 2', 2"a, 2"b) vorgesehen ist.

4. Führungsschiene nach Anspruch 1, **dadurch gekennzeichnet, daß** die Schweißnaht (200) an einer umlaufenden Kante des Anbauteils (2, 2', 2"a, 2"b) vorgesehen ist.

5. Führungsschiene nach wenigstens einem der Ansprüche 1 bis 4, **dadurch gekennzeichnet, daß** das Anbauteil (2) stumpf auf die Oberfläche der Führungsschiene (1) aufgesetzt ist.

6. Führungsschiene nach wenigstens einem der Ansprüche 1 bis 4, **dadurch gekennzeichnet, daß** das Anbauteil (2"a, 2"b) einen Bereich, der stumpf auf der Oberfläche der Führungsschiene (1) aufgesetzt ist, und einen daran angrenzenden abgewinkelten Bereich (22a, 22b) aufweist, wobei dem abgewinkelten Bereich (22a, 22b) in der Führungsschiene (1) eine Eingriffsöffnung (10a, 10b) zur Herstellung einer formschlüssigen Verbindung zugeordnet ist.

7. Führungsschiene nach wenigstens einem der voranstehenden Ansprüche, **dadurch gekennzeichnet, daß** in das Anbauteil Mittel zur Anbindung eines Sicherheitsgurtes integriert sind.

## Claims

1. Guide rail for a motor vehicle seat with mountings for connecting a seat frame or a seat belt
**characterised in that**
at least one part of the mountings (2, 2"a, 2"b) is fitted by one region (20) obtusely on a surface of the guide rail (1) and is connected to the guide rail (1) by laser welding.

2. Guide rail according to claim 1, **characterised in that** at least a part of the abutment edge (10) of the mounting (2) provided for forming the welded seam (200) is prepared for laser welding whereby the smooth cut proportion amounts preferably to at least 60 percent.

3. Guide rail according to claim 1, **characterised in that** the welded seam (200) is provided on opposite edges of the mounting (2, 2', 2"a, 2"b).

4. Guide rail according to claim 1, **characterised in that** the welded seam (200) is provided on a circumferential edge of the mounting (2, 2', 2"a, 2"b).

5. Guide rail according to at least one of claims 1 to 4, **characterised in that** the mounting (2) is fitted bluntly on the surface of the guide rail (1).

6. Guide rail according to at least one of claims 1 to 4 **characterised in that** the mounting (2"a, 2"b) has a region, which is fitted obtusely on the surface of the guide rail (1), and an angled region (22a, 22b) adjoining same whereby an engagement opening (10a, 10b) is allocated to the angled region (22a, 22b) in the guide rail (1) to produce a positive locking connection.

7. Guide rail according to at least one of the preceding claims **characterised in that** means are integrated in the mounting for connecting a seat belt.

## Revendications

1. Rail de guidage pour un siège de véhicule automobile avec des éléments destinés à la fixation d'un châssis de siège ou d'une ceinture de sécurité,
**caractérisé en ce que**
au moins une partie des éléments (2, 2"a, 2"b) est agencée au moins avec une zone partielle (20) de façon obtuse sur une surface du rail de guidage (1) et est raccordée par soudage laser au rail de guidage (1).

2. Rail de guidage selon la revendication 1, **caractérisé en ce qu'**au moins une partie du bord d'attaque (20) prévue pour la formation du cordon de soudure (200) de l'élément (2) est préparée pour le soudage laser, dans lequel la partie de coupe lisse est de préférence d'au moins 60 pour cent.

3. Rail de guidage selon la revendication 1, **caractérisé en ce que** le cordon de soudure (200) est prévu sur les bords opposés de l'élément (2, 2', 2"a, 2"b).

4. Rail de guidage selon la revendication 1, **caractérisé en ce que** le cordon de soudure (200) est prévu sur un bord circulaire de l'élément (2, 2', 2"a, 2"b).

5. Rail de guidage selon au moins l'une des revendications 1 à 4, **caractérisé en ce que** l'élément (2) est appliqué de façon obtuse sur la surface du rail de guidage (1).

6. Rail de guidage selon au moins l'une des revendications 1 à 4, **caractérisé en ce que** l'élément (2"a, 2"b) comporte une zone qui est appliquée de façon obtuse sur la surface du rail de guidage (1) et une zone angulaire limitrophe à celui-ci (22a, 22b), la zone angulaire (22a, 22b) dans le rail de guidage (1) comportant une ouverture d'attaque (10a, 10b) pour la formation d'une liaison par engagement positif.

7. Rail de guidage selon au moins l'une des revendications précédentes, **caractérisé en ce que** dans l'élément sont intégrés des moyens pour la fixation d'une ceinture de sécurité.
